# EUROPEAN PATENT SPECIFICATION

(11) **EP 0 728 165 B1**
(45) Date of publication and mention of the grant of the patent: **10.05.2000**
(21) Application number: 94930056.0
(22) Date of filing: 05.10.1994
(51) Int. Cl.: C09J 4/06, C09J 7/02

(54) **TOPOGRAPHICAL METHOD**
TOPOGRAPHISCHES VERFAHREN
PROCEDE DE PRODUCTION DE STRUCTURES EN RELIEF

(30) Priority: 10.11.1993 US 150212
(43) Date of publication of application: 28.08.1996
(60) Divisional application: 97108444.7
(73) Proprietor: MINNESOTA MINING AND MANUFACTURING COMPANY, St. Paul, Minnesota 55133-3427 (US)
(72) Inventor: JOHNSON, Michael, A., Saint Paul, MN 55133-3427 (US); KITANO, Shuichi, Saint Paul, MN 55133-3427 (US); ITOH, Akira, Saint Paul, MN 55133-3427 (US); WILLETT, Peggy, S., Saint Paul, MN 55133-3427 (US); TUMEY, Michael, L., Saint Paul, MN 55133-3427 (US)
(74) Representative: Warcoin, Jacques
(86) International application number: US9411330
(87) International publication number: WO9513327

(56) References cited:
- EP-A- 0 359 373
- EP-A- 0 386 909
- WO-A-93/23487
- DATABASE WPI Section Ch, Week 9228, Derwent Publications Ltd., London, GB; Class A14, AN 92-229909 & JP,A,4 153 285 (NITTO DENKO CORP) 26 May 1992

## Description

### CROSS REFERENCE TO RELATED APPLICATION

A related application is PCT International Application No. PCT/US93/03469, International Publication No. WO 93/23487, published November 25, 1993. This application falls within the scope of Art. 54(3) and (4) EPC according to Art. 158 EPC.

### FIELD OF THE INVENTION

This invention relates to a method for providing topographical features to a substrate.

### BACKGROUND OF THE INVENTION

U.S. Patent No. 5,086,088 (corresponding to EP.A.0 386 909) discloses a latent, thermosettable pressure-sensitive adhesive composition comprising an acrylate pressure-sensitive adhesive and an epoxy resin component which provides for the thermoset cure. The adhesive composition is disclosed as being useful to fasten roof molding to a car body.

European Patent Publication No. 0 359 373 A2 discloses an adhesive tape comprising an energy beam transmittable base sheet having a surface tension of not more than 40 10⁻⁵ N/cm and an adhesive layer formed on one surface of the base sheet. The adhesive layer comprises a (meth)acrylate polymer, an epoxy resin, a photopolymerizable low molecular weight compound, a heat activatable potential curing agent for the epoxy resin, and a photopolymerization initiator for the photopolymerizable low molecular weight compound. The tape can be used in processing a semiconductor wafer.

Japanese Patent Publication No. 4153285 (Nitto Denka Corp.) discloses a tape that is obtained by forming on one surface of a thin base material a pressure sensitive adhesive layer consisting mainly of an acrylic copolymer obtained by copolymerizing a mixture of 60 - 95 parts wt. of C₄₋₁₈ alkyl (meth)acrylate(s), 30-5 parts wt. of N-vinyl-2-pyrrolidine, and 0.05-20 parts wt. of active hydrogen containing copolymerizable monomer(s) (e.g., (meth)acrylic acid, 2-hydroxyethyl acrylate and acrylamide).

### BRIEF SUMMARY OF THE INSTANT INVENTION

The instant invention provides a method for imparting topographical to a permanent substrate, comprising the steps of:
a) providing a hardenable sheet material having first and second major surfaces, comprising a latent thermosettable pressure-sensitive adhesive throughout a major portion of its thickness, exhibiting pressure-sensitive adhesive properties at said first major surface, and having a thermoplastic film that is dimensionally stable at said second major surface;
b) contacting and adhering said first major surface of said sheet material to said permanent substrate or a temporary substrate leaving said dimensionally stable thermoplastic film at said second major surface of said sheet material exposed;
c) thermosetting and hardening said sheet material to provide a smooth transition between said dimensionally stable thermoplastic film and said permanent substrate or said temporary substrate to which it has been adhered; and
d) in the event said hardened sheet material is adhered to said temporary substrate, removing said hardened sheet material therefrom and thereafter fastening said first major surface of said sheet material to said permanent substrate,
wherein the adhesive exhibits pressure-sensitive adhesive properties at the temperature at which the sheet material is contacted with the permanent substrate or temporary substrate in step b).

In a preferred method, the sheet material is adhered to the permanent substrate in the first instance.

The method of the invention finds particular utility in the application of sheet material to primed or unprimed metal automobile parts or bodies to seal metal parts or provide emblems or insignia or design elements such as trim. The resulting laminate is aesthetic since the hardened sheet material exhibits smooth, rounded edges relative to the substrate, and can be painted or otherwise decorated as desired to match or complement the remainder of the automobile.

Another application of the method of the invention is in the fabrication of signs which are then adhered to the permanent surface by means of an adhesive distinct from the sheet material employed in making the sign or other article.

### DETAILED DESCRIPTION OF THE INVENTION

The sheet material employed in the method of the invention comprises a latent, thermosettable pressure-sensitive adhesive. By "pressure-sensitive adhesive" is meant that the adhesive exhibits pressure-sensitive adhesive properties at the temperature at which the sheet material is contacted with the permanent substrate or temporary substrate in step b) of the method. Generally, the temperature involved in that step will be between ambient temperature and 205°C (400°F). It is presently preferred that the adhesive exhibit pressure-sensitive adhesive properties at ambient temperature such as 22°C.

In certain applications where the sheet may require repositioning on or initial adhesion to a substrate is not desired, it is desirable for the sheet to be tack-free at room temperature, but then upon heating, the sheet becomes tacky.

The composition of the thermosettable pressure-sensitive adhesive contained in the sheet material is such that, when employed in the method of the invention, its modulus decreases permitting controlled flow of the sheet material at its edges resulting in smooth transition lines between the exposed surface of the sheet material and the substrate to which it has been adhered. By "controlled flow" is meant that there is no substantial change in the dimensions of the sheet material in its x- and y-planes defining the first major surface. Typically the sheet material will have been configured in the desired shape and dimensions by a process such as die-cutting or knife or laser slitting resulting in sharp transition lines. After the above-described controlled flow has occurred, a latent curing or crosslinking chemistry is activated to harden the sheet material and the pressure-sensitive adhesive therein. Accompanying such hardening may be a loss of substantially all the pressure-sensitive adhesiveness of the sheet material. In a preferred method of the invention, the controlled mass flow and subsequent thermosetting, i.e., curing and/or cross-linking, reaction result from heating of the sheet material.

The sheet material used in the method of the invention comprises a latent thermosettable pressure-sensitive adhesive throughout a major portion of its thickness. Preferably, the sheet material comprises the adhesive throughout its entire thickness.

The thermosettable pressure-sensitive adhesive preferably comprises the photochemical reaction product of starting materials comprising i) a prepolymeric (i.e., partially polymerized to a viscous syrup typically between 0.1 to 10 Pa.s, i.e. 100 to 10,000 centipoises) or monomeric syrup comprising an alkyl acrylate or methacrylate wherein said alkyl moiety comprises 4-12 carbon atoms; ii) an epoxy resin; iii) a photoinitiator; and iv) a heat-activable hardener for the epoxy resin. Such a composition may be coated and polymerized conveniently in a variety of thicknesses including relatively thick sections.

The photopolymerizable prepolymeric or monomeric syrup contains an acrylate or methacrylate and optionally a copolymerizable reinforcing comonomer. The acrylate or methacrylate is a monofunctional acrylic or methacrylic ester of a non-tertiary alcohol, having from 4 to 12 carbon atoms in the alcohol moiety. Included in this class of esters are n-butyl acrylate, hexyl acrylate, 2-ethylhexyl acrylate, octyl acrylate, isooctyl acrylate, decyl acrylate and dodecyl acrylate. Mixtures of esters may be employed.

The copolymerizable reinforcing comonomer, if employed, is preferably selected from the group consisting of monomers such as acrylic acid, isobornyl acrylate, N-vinyl pyrrolidone, N-vinyl caprolactam, N-vinyl piperidine, N,N-dimethylacrylamide, and acrylonitrile. Preferred reinforcing monomers are nitrogen-containing such as those nitrogen-containing monomers listed above. The reinforcing comonomer will generally be selected such that a homopolymer prepared therefrom will have a glass transition higher than a homopolymer prepared from the acrylate or methacrylate employed.

In the event that the prepolymeric or monomeric syrup comprises both an alkyl acrylate or methacrylate and a reinforcing comonomer, the alkyl acrylate or methacrylate will generally be present in an amount of 50 to 95 parts by weight, and the reinforcing comonomer will be present in a corresponding amount of 50 to 5 parts by weight. One skilled in the art will be able to vary the nature and amount of the reinforcing monomer to obtain the pressure-sensitive adhesive properties desired.

It may also be desirable to employ glycidyl methacrylate, glycidyl acrylate or another epoxy-functional monomer as a starting material together with the acrylate or methacrylate and reinforcing comonomer, if employed. Such an epoxy-functional monomer, if employed, will preferably be present in an amount of 0.1 to 10 parts by weight per 100 parts by weight of all monomers used.

Another epoxy-functional oligomer useful as a reinforcing or cross-linking species is the epoxy adduct of 2-isocyanatoethylmethacrylate and the diglycidyl ether of bisphenol A. The useful reinforcing agents increase the modulus of the cured composition without significantly affecting the melt flow characteristic of the material.

The reinforcement of the cured composition may also be effected by the use of silanes which have an organofunctional group capable of reacting with an epoxy group, or a vinyl group, and a silane functional group which can react with silanol groups at the surface of suitable inorganic fillers.

Silanes are commercially available from a number of different suppliers including Hüls America, Inc. Mixtures of silanes may also be used. In a useful embodiment, a mixture of two silanes having different functional groups can be used. For example, the first silane may contain a functional group that is selectively reactive with the oxirane group of the epoxy resin and the second silane contains a functional group that is reactive with the acrylates. In practice, the silica fillers might then serve as a bridging component to connect the epoxy and acrylate phases of the thermosettable pressure sensitive adhesive. A blend of commercially available silanes that function in this manner are Hüls G6720 (epoxy silane) and Hüls M8550 (methacrylate silane). The blend can be used in a 1:1 ratio, although the amount of each silane could be adjusted for the ratio of the acrylates and the epoxies in the formulation.

Reinforcement can also be achieved by adding suitable polymers or copolymers to the composition. Useful reinforcing polymers and copolymers are those having a glass transition temperature greater than 25°C. The polymers or copolymers are those that can be dissolved by the acrylate monomers. Some polymers may require heating of the polymer/acrylate monomer mixture to form a solution. A specific example of a useful polymer is a polyacetal such as poly(vinylbutyral), and examples of copolymers are methyl methacrylate/butyl methacrylate, polyethylmethylmethacrylate, and polyisobutylmethacrylate. Suitable copolymers are available commercially from Rohm & Haas such as Acryloid™ B-66, Acryloid™ B-60 and Acryloid™ B-67.

A preferred polymer is polyvinyl butyral (PVB) because it not only increases the modulus of the cured composition but also enhances the adhesion of the paint to the sheet. Preferably, the PVB has a hydroxyl functionality sufficient for solubility in the acrylate monomers. Hydroxyl functionalities between 9% and 13% have been found to be useful. The PVB can be used in amounts from 10 to 120 parts PVB per 100 parts of acrylate. Higher amounts can be used although the high viscosity of the mixture may require specialized equipment. Preferred amounts of PVB are between 20 to 80 parts PVB per 100 parts acrylate for enhanced reinforcement.

Poly(vinylbutyral) resins are sold by Monsanto under the trademark Butvar™ in various grades having different molecular weights, etc. For constructions where more melt flow is desired, the lower molecular weights, i.e., less than 40,000 are useful, although higher molecular weight resins are useful where excessive flow is not needed. (Polyvinyl)butyral may also be added in a sufficient amount to reduce or eliminate the tack of the sheet material.

The acrylic copolymers useful in the pressure-sensitive adhesive are very stable compositions. Because of their stability, the sheet material employed in the method of the invention may be subjected to the heat conditions required for curing the epoxy resin without degradation of the pressure-sensitive adhesive portion of the composition. Other types of pressure-sensitive adhesives might experience a partial or total loss of adhesion, causing detachment of the sheet material from the substrate such as a structural part to which it has been adhered prior to the conditions required, i.e., length and elevation of temperature, for thermosetting of the epoxy resin.

Further, both the photopolymerizable acrylic or methacrylic prepolymer or monomeric syrup and the photopolymerized polymer form a stable mixture with the epoxy resin.

Useful epoxy resins may be selected from the group of compounds that contain an average of more than one, and preferably at least two, epoxy groups per molecule. The epoxy resin preferably is either liquid or a semi-liquid at room temperature for handling purposes. Most preferred is a mixture of a liquid and solid resin. Representative examples include phenolic epoxy resins, bisphenol epoxy resins, hydrogenated bisphenol epoxy resins, aliphatic epoxy resins, cycloalipatic and halogenated bisphenol epoxy resins. Mixtures of epoxy resins may be employed.

Preferred epoxy resins include bisphenol epoxies with the most preferred epoxy resin being the diglycidyl ether of a bisphenol-A, formed by reaction of bisphenol-A with epichlorohydrin.

The epoxy resin will generally be present in an amount of 25 to 120 parts by weight based on 100 parts by weight of the prepolymeric or monomeric syrup.

The photoinitiator employed to polymerize the prepolymeric or monomeric syrup may be any conventional free radical photoinitiator activatable by, for example, ultraviolet light. An example of a suitable photoinitiator is 2,2-dimethoxy-1,2-diphenylethane-1-one (Irgacure™651 available from Ciba-Geigy Corporation). The photoinitiator will typically be employed in an amount of 0.01 to 5 parts by weight per 100 parts of the prepolymeric or monomeric syrup.

The heat-activatable hardener is added to effect the curing of the epoxy resin under application of heat. The hardener may be any type, but preferably an amine type hardener that is selected from the group comprising dicyandiamide or polyamine salts. These are available from a variety of sources, e.g., Omicure™ available from Omicron Chemical and Ajicure™ available from Ajinomoto Chemical. The heat-activatable hardener will typically be employed in an amount of 0.1 to 20 parts by weight, and preferably 0.5 to 10 parts by weight per 100 parts by weight of the prepolymeric or monomeric syrup. Sufficient hardener should be employed to achieve cure of the epoxy resin.

Because there are many points in, for example, an automotive painting cycle at which the sheet material may be used, the heat to which the sheet material is exposed may be insufficient to fully cure the epoxy resin. In these cases, it may be advantageous to add an accelerator to the prepolymer blend, so the resin may fully cure at a lower temperature, or may fully cure when exposed to heat for shorter periods. Imidazoles and urea derivatives are particularly preferred in the practice of the present invention for use as accelerators because of their ability, as shown by the examples herein, to extend the shelf life of acrylic based materials containing uncured epoxy resin. The most presently preferred imidazoles for use in the present invention are 2,4-diamino-6-[2'-methyl-imidazolyl-(1')]ethyl-s-triazine isocyanurate, 2-phenyl-4-benzyl-5-hydroxymethylimidazole, hexakis (imidazole) nickel phthalate, and 2,4-diamino-6-[2'-methylimidazolyl-( 1')]ethyl-s-triazine and toluene bis-dimethylurea. Such an accelerator may be employed typically in an amount of up to 20 parts by weight per 100 parts by weight of the prepolymeric or monomeric syrup.

In order to provide a sheet material exhibiting the desired flow characteristics in response to heating it may be desirable to include a chain transfer agent in the starting materials used for preparing the thermosettable pressure-sensitive adhesive. Such inclusion facilitates obtainment of a lower molecular weight acrylic polymer having a broader distribution of molecular weight.

The addition of polycaprolactone polyols to the latent, thermally curable, pressure-sensitive adhesive acrylate-epoxy composition has been found to enhance the flow properties of the composition upon thermal curing as well as to improve the paint adhesion at low temperatures.

The polycaprolactone polyols (also referred to herein as polycaprolactones) that are useful in the practice of the present invention include those described in U.S. Pat. No. 3,169,945. Preferred polycaprolactone polyols are those represented by the following structure:

HO-[(CH₂)₅-C(=O)-O]ₙ-R-[O-C(=O)-(CH₂)₅]ₙ-OH

wherein
R is a divalent alkylene radical, and
n is approximately 2-200
Useful commercially available polycaprolactone polyols are available from Union Carbide, Inc. under the Tone™ trademark as diols and polymers.

Polyester polymers have also been found to be useful additives in practicing this invention. Preferred polyesters are those having carboxyl or hydroxyl terminal groups and a number average molecular weight between 7500 to 200,000, more preferably between 10,000 to 50,000, and most preferably between 15,000 to 30,000. It is preferred that the polyester polymers are also linear, saturated, and semi-crystalline copolyesters. Suitable commercially available copolyester materials include Dynapol™S1402, Dynapol™S1358, Dynapol™S1227, Dynapol™S1229, Dynapol™S1359, and Dynapol™S1401 available from Hüls America, Inc.

Other useful materials which can be blended into the thermosettable pressure-sensitive adhesive include, fillers, pigments, fibers, woven and nonwoven fabrics, foaming agents, antioxidants, stabilizers, fire retardants, and viscosity adjusting agents.

In particular, nonwoven or loosely woven scrim materials have been found to be useful in reinforcing the sheet material. Nonwovens can be formed from polymeric fibers that adhere to the sheet material such as polyester, nylon, polypropylene, cellulose acetate, acetate, and blends thereof. It is preferred that they are relatively thin materials, e.g., from 0.005 mm to 0.1 mm. The useful thickness of the scrim materials can vary depending upon the thickness of the sheet material, but typically, it is less than 20% of the thickness of the sheet, and preferably the nonwoven thickness is less than 10% of the thickness of the sheet. Nonwovens materials used to channel trapped air during bonding, as detailed here below, preferably have a basis weight of 5 to 20 grams/square centimeter. Suitable nonwovens are commercially available under the trade name Cerex™, from Mitsubishi Petrochemical Co. under the trade name Syntex™, and from Reemay Inc. The nonwoven materials may be embedded within the sheet material or located on one or both sides of the sheet material.

Long fibers, yarns, and filaments are also found to be useful in reinforcing the sheet material. Preferred fibers have a fiber diameter greater than 5 microns and less than one-tenth of the thickness of the sheet material. The fibers and filaments can be made from polyester, nylon, acetate, and cellulose. The number of fibers and filaments used will vary depending upon the amount of reinforcement required. The number of fibers, yarns or filaments that may be used can vary from about 1 to 2000 per cm width. Practically, the number of fibers, filaments per cm width would be in the range of about 1 to 200 due to the cost of the filaments and case of handling.

A thermoplastic film that is dimensionally stable at exposure temperatures of use, i.e., oven paint cure cycles up to 200°C or cold weather temperatures, may be laminated to the sheet material to provide a very smooth surface for painting. Preferably painting is prior or subsequent to step c). Useful films include polyimide films and biaxially oriented polyester films in thicknesses of from 0.025 mm to 0.5 mm, and preferably in the range of 0.05 mm to 0.25 mm.

The sheet material employed in the method of the present invention is preferably prepared by premixing together the photopolymerizable monomers and the photoinitiator. This premix is then partially polymerized to a viscosity in the range of from 0.5 to 5 Pa.s (500 cps to 5,000 cps) to achieve a coatable syrup. Alternatively, the monomers may be mixed with a thixotropic agent such as fumed hydrophilic silica to achieve a coatable thickness. The other ingredients such as the epoxy resin and heat-activatable hardener are then added to the syrup prior to photo-polymerization.

The above composition is coated onto a flexible carrier web, preferably a silicone release liner which is transparent to ultraviolet radiation, and polymerized in an inert, i.e., a oxygen free, atmosphere, e.g., a nitrogen atmosphere. A sufficiently inert atmosphere can be achieved by covering a layer of the photoactive coating with a plastic film which is transparent to ultraviolet radiation, and irradiating through that film in air as described in U.S. Pat. No. 4,181,752 (Martens et al.). The liners may then be removed when it is desired to use the resulting sheet material in the method of the invention.

The nonwoven can be incorporated into the sheet material by placing the nonwoven material on top of the silicone release liner and coating the composition on top of the nonwoven. Fibers or filaments can also be embedded into the sheet material by laying the fibers onto the coated syrup before polymerizing.

Alternatively, the nonwoven material, and fibers or filaments may be laminated to the finished sheet material using conventional equipment such as nip rollers if the sheet material is sufficiently tacky to adhere to the nonwoven or the fibers. If the sheet material is not tacky, the nonwoven or fibers may be laminated to the sheet material by heating the sheet material and laminating or using heated nip rollers. If heat is used, the sheet material must be maintained at a temperature below the thermosetting temperature of the sheet material.

It has been discovered that when the nonwoven or fibers are adhered to the surface of the sheet material, a further advantage is provided. When the sheet material is applied to a surface to be sealed, air can be entrapped between the sheet material and surface, particularly when the sheet material is tacky. When the sheet material is heated to thermoset, the air expands and creates an air bubble. As the applied sheet material is cooled, the air bubble collapses and leaves an unsightly crater. The advantage of using the nonwoven or fibers adhered to the outside surface of the sheet material is when that the fiber or nonwoven side of the sheet material is adhered to the surface, channels are provided for entrapped air to escape. Thus when the sheet material is heated, the adhesive flows through the nonwoven or around the fibers to bond to the surface without craters.

The nonwoven may be applied to cover only a portion of the sheet material or all of the sheet material.

The method of the present invention has a number of applications in industry. One utility of the method is in the automotive industry where it can be utilized in a process to seal metal joints in automobiles. By this process, one first prepares the sheet material such as by the above-described process. Subsequently, the sheet material would be applied over the joint to be sealed. Complete sealing and bonding would be obtained because the sheet material flows prior to hardening. As a result of the controlled flow of the edges of the sheet material, an aesthetic surface appearance is achieved. The exposed surface of the hardened sheet material can then be painted or otherwise decorated to match the automobile body.

An alternative application of the method of the invention is in the application of emblems or insignia or design elements to surfaces such as an automobile body. An example of an emblem or insignia is a logo of an automobile manufacturer. An example of a design element is trim to enhance and highlight auto body curvature and to provide protection to the primed metal substructure without the need for complex metal stamping to obtain the shape. In such a method, the sheet material is configured initially in the shape of the emblem or insignia or design elements desired such as by die-cutting. Practice of the method of the invention thereby provides an aesthetically pleasing emblem or insignia having smooth transition lines relative to the surface to which it has been bonded.

In still another application of the method of the invention, the substrate to which the sheet material is initially adhered is a temporary substrate such as a disposable liner. Subsequent to hardening of the sheet material in a fashion to provide the controlled flow of its edges, the hardened sheet material may be fastened (e.g., adhered) to the permanent substrate through the use, for example, of an adhesive system distinct from the sheet material itself since the hardened sheet material may be devoid of pressure-sensitive adhesive properties. In this manner, the method of the invention may be used to apply configured, hardened sheet materials such as signs to surfaces such as wooden doors.

The invention is further illustrated by the following examples in which all parts are expressed as parts by weight unless otherwise indicated. The amounts of materials used in the examples are given in parts by weight unless otherwise specified.

### Test Methods

120°C (250°F) Shear Creep Flow Test: A 4.8 cm² (¾ inch²) piece of tape is placed at the top of a 5 cm (2 inch) by 15 cm (6 inch) anodized aluminum panel. A 5 cm (2 inch) by 2.5 cm (1 inch) piece of anodized aluminum weighing approximately 5.5g is placed on top of the tape and parallel to the base panel; contact is made by rolling twice with a 6.8 kg (15 lb) wheel. A line is drawn to mark the initial position of the small aluminum piece. The panel is then hung vertically on a rack and placed in a 120°C (250°F) oven for 30 minutes. After this time, the rack is removed and allowed to cool. When cool, the panel is removed from the rack and the position of the small aluminum piece of marked by drawing a line. The difference between the initial position and the position after heating is measured in centimeters. If the tape is very meltable and the small aluminum piece falls off, a reading of > 15 cm will be noted.

Melt Flow Visual Observation: A 6.5 cm² (1 inch²) piece of tape is placed on a steel panel which has been electro-coated with paint primer, such as PPG ED-3150 (from Advanced Coatings Technology, Inc., Michigan). The panel with tape is placed horizontally in a 120°C (250°F) oven for 30 minutes, then removed and allowed to cool to room temperature. Visual examination of the tape is made based on the following criteria:
1 = no flow, tape has square edges.
2 = some flow, tape has slightly rounded edges.
3 = more flow, tape has very rounded edges.
4 = more flow, tape is starting to become liquid.
5 = most flow, tape has become liquid.

Vertical Flow During Cure: Flow during cure is measured by cutting a sample, approximately 2.54 cm by 1.27 cm, adhering it to a panel which has been electro-coated with paint primer (PPG ED-11 primer from Advanced Coatings Technology, Inc., Michigan). The position of the bottom of the tape is marked, then the panel with tape is placed vertically in a 177°C oven for 20 minutes. The panel is then removed and allowed to cool to room temperature. The amount of flow is measured in millimeters from the mark prior to heating to the position of the bottom of the tape after heating and curing.

Paint Adhesion: A sample measuring about 2.54cm by 7.5cm is applied to a PPC₇ ED-11 painted panel and heated at 177°C for 12 minutes. The panel is then spray coated with a base coat HWB90394 (white from PPG Industries, Inc.) and baked in an oven at 121°C for 30 minutes. A two-part clear coat (Part A is CNCT2AH, Part B is CNCT2BE) was mixed by hand and spray coated onto the base coat. The painted panel is cured in a second cycle as described above. The painted panel is then cooled to room temperature and conditioned for at least 16 hours. The paint is then tested for paint adhesion by cross hatching the cured paint surface and testing for adhesion of the paint to the sheet. The test is conducted according to ASTM D-3359-90. The test results are reported as a percentage of the paint surface that is left intact.

Tensile Strength: The tensile strength and elongation of the sheets is measured both uncured (after the sheet is made) and with a thermal cure (20 minutes at 177°C). The tensile strength and elongation are determined according to ASTM 412-87 on an Instron™Tensile Tester, using the described sample length of 33.27 mm., and a jaw separation speed of 50.8 centimeters per minutes. The samples are conditioned at least 24 hours after curing before testing. Tensile results are reported in megaPascals (MPa) and elongation is reported in percent of the original length (%).

Overlap Shear Strength: A 1.25 cm by 2.54 cm strip of sheet material is adhered between overlapping ends of two ED-11 panels (PPG ED-11 electrodeposition primed steel panel available from Advanced Coating Technologies, Inc.) measuring 2.5 cm by 5 cm. The sample is rolled down with two passes of a 6.8 kg roller.

For initial test results, the sample (not thermally cured) is conditioned at room temperature for 20 minutes, then the panels are clamped into the jaws of an Instron™Tensile Tester and the jaws are separated at a rate of 5 cm/mm. The force at adhesive failure is recorded in megaPascals (MPa).

For cured shear strength, the sample is heated at 177°C for 12 minutes, then heated at 120°C for 30 minutes, and then cooled to room temperature and conditioned for 16 hours before testing.

90° Peel Adhesion: The peel adhesion is determined by laminating a 1.27 cm by 15.24 cm strip of the sheet material to a 0.13 mm thick strip of anodized aluminum. The strip is then laminated to an ED-11 panel and rolled down with 2 passes of a 2 kg roller. The panel is then attached to a fixture on an Instron™Tensile Tester so that the aluminum foil is pulled off at a 90° angle at a crosshead speed of 30.48 centimeters per minute. The peel adhesion is recorded in Newtons per decimeter (N/dm).

Cured Hardness: The hardness of a sample cured for 20 minutes at 177°C is determined using a conventional hardness tester and the test results are reported in Shore A hardness.

### GLOSSARY

BA - Butyl acrylate (Union Carbide)
NVC - N-Vinyl caprolactam (BASF)
NNDMA - N,N-Dimethylacrylamide (Jarchem)
Acryloid™B-60 - Methyl methacrylate/butyl methacrylate copolymer, Tg = 75°C (Rohm and Haas)
Epon™828 - Diglycidyl ether of bisphenol A (Shell Chemical)
Eponex™1510 - Hydrogenated diglycidyl ether of bisphenol A (Shell Chemical)
Tone™0200 - Polycaprolactone diol (Union Carbide; M.W. = 530)
Tone™0210 - Polycaprolactone diol (Union Carbide; M.W. = 830)
Tone™0230 - Polycaprolactone diol (Union Carbide; M.W. = 1250)
Tone™0240 - Polycaprolactone diol (Union Carbide; M.W. = 2000)
Tone™0260 - Polycaprolactone diol (Union Carbide; M.W. = 3000)
Tone™P300 - Polycaprolactone polymer (Union Carbide)
Tone™P767E - Polycaprolactone polymer (Union Carbide)
Dynapol™S1402 - Polyester copolymer (Hüls America, Inc.)
KB-1 - Esacure KB-1 - Benzil dimethyl ketal (Sartomer)
Irg 1010 - Irganox™1010 Antioxidant (Ciba-Geigy)
DICY - Micronized dicyandiamide
HINP - hexakis(imidazole) nickel phthalate
M5 - Cab-O-Sil™M5 - Hydrophilic fumed silica (Cabot Corporation)
2MZ Azine - Curezol™2MZ Azine - 2,4-Diamino-6 [2'-methylimidazolyl-(1')] ethyl-s-triazine (Air Products)
C15-250 - glass microspheres (Minnesota Mining & Manufacturing Co.)
CBr₄ - carbon tetrabromide
IRG 651 - benzil dimethyl ketal (Irgacure™ 651 Ciba Geigy)
EPIKOTE - epoxy resins under this trade name are equivalent to the Epon material of the same number
2MAOK - 2,4-Diamino-6-[2'-methylimidazolyl-(1')]ethyl-s-triazine isocyanurate adduct epoxy hardener from Shikoku Chemical Co.Ltd.
Butvar B-79 - polyvinylbutyral resin from Monsanto Co. having molecular weight of 34000-38000
Butvar B-76 - polyvinylbutyral resin from Monsanto Co. having molecular weight of 40000-55000

### EXAMPLE 1

One hundred parts of a mixture of n-butyl acrylate/N-vinyl caprolactam, with a monomer ratio of 80/20, was blended with 0.04 parts of Irgacure™651 photoinitiator and photopolymerized with an ultraviolet (UV) light source (Sylvania F20T 12BL) under a constant nitrogen purge to a viscosity of 3 Pa.s (3000 cps). An additional 0.1 part of Irgacure™651 (available from Ciba-Geigy Corporation), 50 parts of Epon™1001 (diglycidyl ether of bisphenol A available from Shell Chemical Co.), 30 parts of Epon™828 (diglycidyl ether of bisphenol A available from Shell Chemical Co.), 5.94 parts of micronized dicyandiamide hardener, 5.04 parts of toluene bis-dimethyl urea (Omicure™24 available from Omicron Chemicals Inc.), and 0.05 parts of 3-mercaptopropionic acid as a chain transfer agent were added. The mixture was thoroughly mixed on a laboratory mixer for 15 minutes and allowed to slowly roll on a ball mill mixer for approximately 16 hours. The mixture was then knife coated at a thickness of 1.016 millimeters (40 mil) onto a transparent silicone coated polyester liner having a thickness of 0.05 millimeters and covered with a second similar polyester liner. The coated mixture was photopolymerized using UV light sources above and below the tape having intensities of 1.82 mWatts/cm² above and 1.73 below at the web as measured using a Uvirad radiometer (Model No. VR365CH3) from E.I.T. (Electronic Instrumentation & Technology, Inc., Sterling, VA). The total UV energy was 450 mJoules/cm².

The liners were removed from the adhesive sheet material obtained above and the sheet material was adhered to a steel sheet. The resulting laminate was then placed for twenty minutes in an oven maintained at 130°C (270°F). During this heating cycle the edges of the sheet material flowed to provide smooth transition lines between the apex of the sheet material and the steel sheet.

### EXAMPLE 2

A sheet material was prepared according to the procedures of Example 1 and was converted into a tape having a width of 1.27 cm (one-half inch). The tape was placed in a recessed lap joint which was prepared by spot welding two pieces of steel together. A base coat ("NHU90394R" available from PPG, Pittsburgh, PA) was applied directly over the tape and the lap joint/tape laminate was placed in an oven maintained at 130°C (270°F) for 20 minutes. A clear coat (DCT 5000 from PPG, Pittsburg, PA) was then applied and the lap joint/tape laminate was thereafter run through a second baking cycle as above. The resulting sealed lap joint had an aesthetically pleasing, painted appearance.

### EXAMPLE 3

An adhesive sheet material was prepared using the ingredients (and amounts thereof) and procedures described in Example 1 except that no chain transfer agent was included, and the amounts of micronized dicyandiamide hardener and toluene bis-dimethyl urea added to the coatable syrup were 10.8 parts and 9.02 parts, respectively.

The sheet material was converted to a tape which was then adhered to a recessed lap joint and processed all as described in Example 2. During the process, the edges of the tape flowed, but to a lesser extent than resulted in Example 2, to provide smooth transition lines between the apex of the tape and the recessed lap joint.

### EXAMPLES 4 - 6

The components which are listed in Table 1A were mixed together to prepare three formulations which varied only in the type of nitrogen-containing copolymerizable monomer used. The ratio of the butyl acrylate to the nitrogen-containing copolymerizable monomer in the syrup was varied so as to maintain the nitrogen-containing monomer on an equivalent molar basis. All amounts are amounts by weight.

Syruping: The acrylate components were blended with photoinitiator and photopolymerized with an ultraviolet (UV) light source under a constant nitrogen purge to produce partially polymerized "syrups". These syrups were then blended with the epoxy, epoxy curatives and other ingredients and were mixed until a solution was achieved.

Coating: These resulting formulations were degassed in a vacuum and fed into the nip of a knife-coater between two transparent, biaxially-oriented polyethylene terphthalate films, the facing surfaces of which had a silicone release coating. The knife coater was adjusted to provide a coating thickness of approximately 1 mm (40 mils). The coatings emerging from the knife coater were irradiated with a UV light source, exposing each side of the coatings to a total energy of 223 mj/cm² at an intensity of 1.29 mW/cm², to give pressure-sensitive transfer tapes. The properties of these tapes are shown in Table 1B.

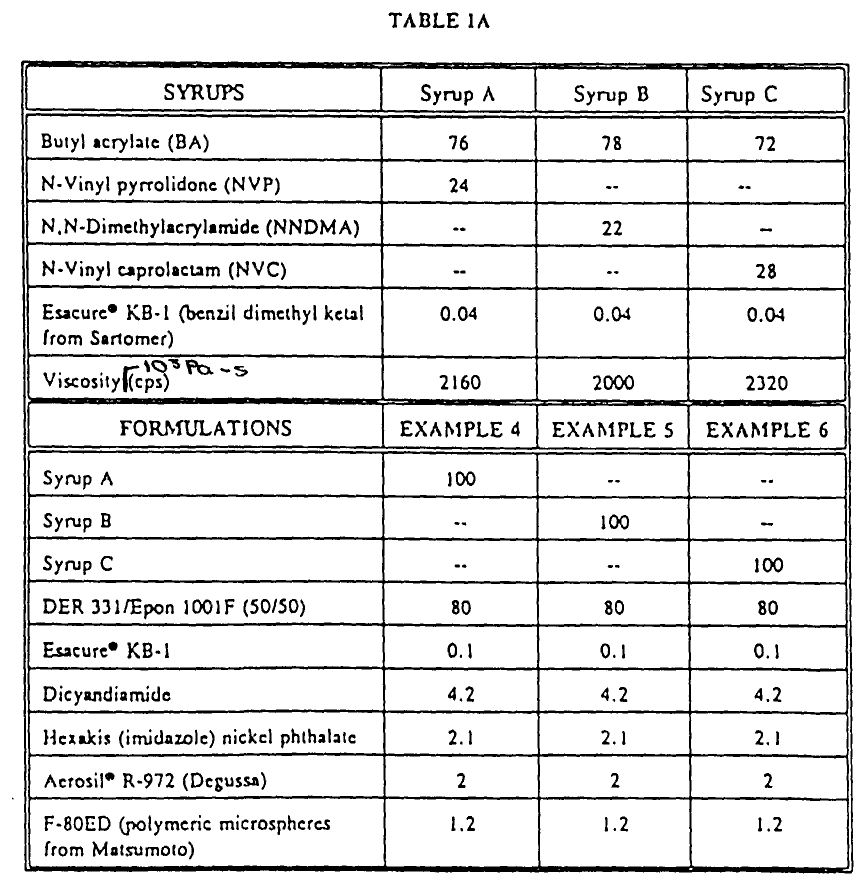

**TABLE 1B**

| **PROPERTIES** | **EXAMPLE 4** | **EXAMPLE 5** | **EXAMPLE 6** |
|---|---|---|---|
| Tensile Strength (uncured), psi | 83 | 5 | 95 |
| % Elongation (uncured) | 1081 | 981 | 710 |
| % Gel (EtOAc x 24 hr), (uncured) | 95 (No sample dissolution) | Sample partially dissolved | 87 (No sample dissolution) |
| Tensile Strength, psi (cured: 140° C x 30 min) | 700 | 215 | 593 |
| % Elongation (cured: 140° C x 30 min) | 55 | 313 | 52 |
| Dynamic Shear off Aluminum, psi (cured: 140° C x 30 min) | 414 | 235 | 441 |

### EXAMPLE 7

As an additional characterization of these systems, the cured transfer tapes (140° C for 30 min) of Examples 4-6 were submitted for analysis by transmission electron microscopy. All the samples showed epoxy domains within a continuous acrylate phase, however, the average size of the majority of those epoxy domains was much larger (0.75 microns) for the Example 5 sample than for the Example 4 sample (0.18 microns) or the Example 6 sample (0.25 microns).

### EXAMPLES 8-11

The components listed in Table 2A were mixed together to prepare four formulations which differed in the non-polar monomer used (BA or IOA), and the nitrogen-containing monomer used (NNDMA or NVC). The formulations were syruped and coated with the procedure described in Examples 4-6. The coated mixture was photopolymerized using UV light sources (positioned above and below the tape) having intensities of 1.1 mW/cm² to 2.5 mW/cm². The total UV energy was 797 mJ/cm². The properties of these tapes are shown in Table 2B.

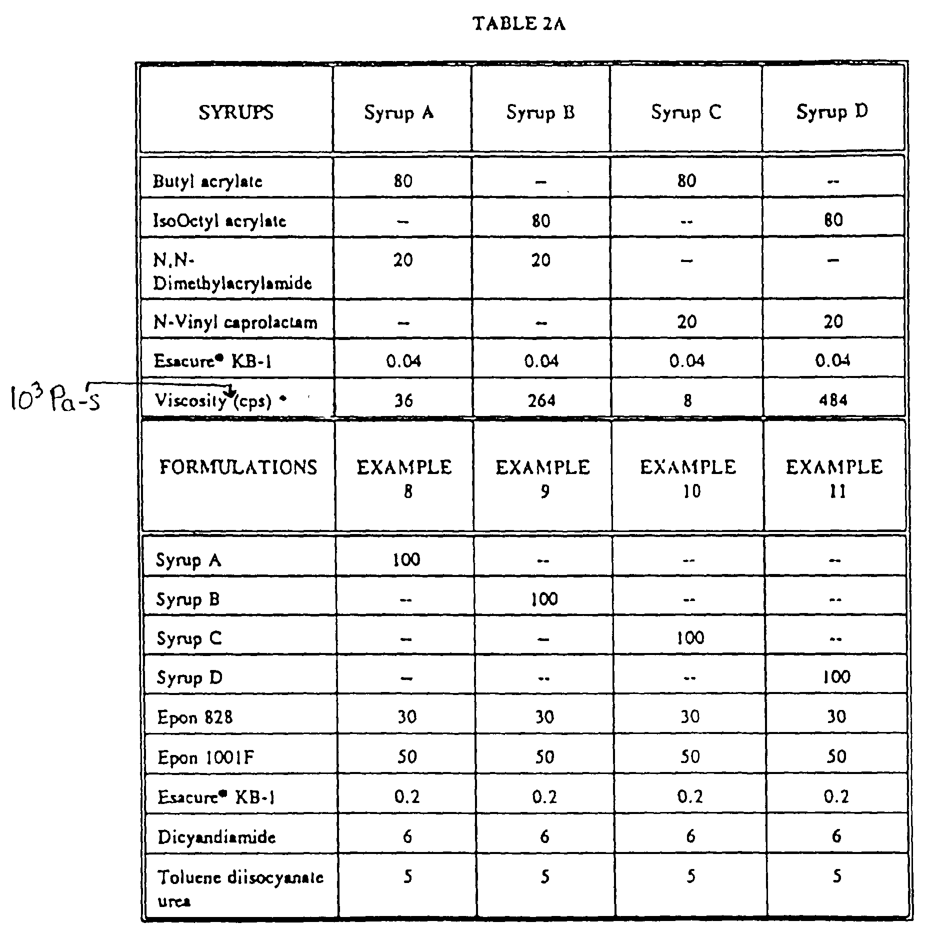

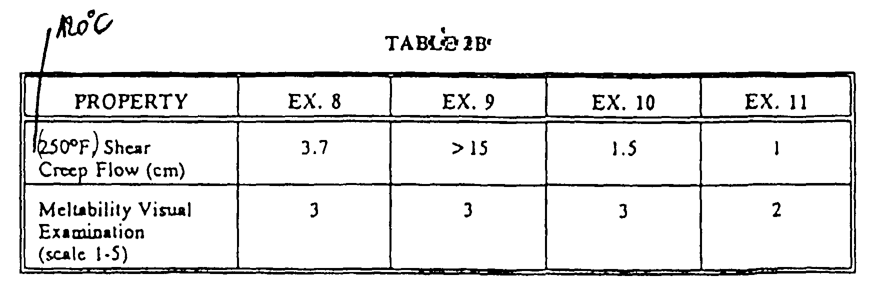

### EXAMPLES 12-16

The components listed in Table 3A were mixed together to prepare five formulations with increasing amounts of NNDMA in combination with NVC in the syrup. The formulations were syruped and coated using the procedure described in Examples 4-6. The coated mixture was photopolymerized using UV light sources (positioned above and below the tape) having intensities of 1.1 mW/cm² to 2.5 mW/cm². The total UV energy was 396 mJ/cm². The properties of these tapes are shown in Table 3B.

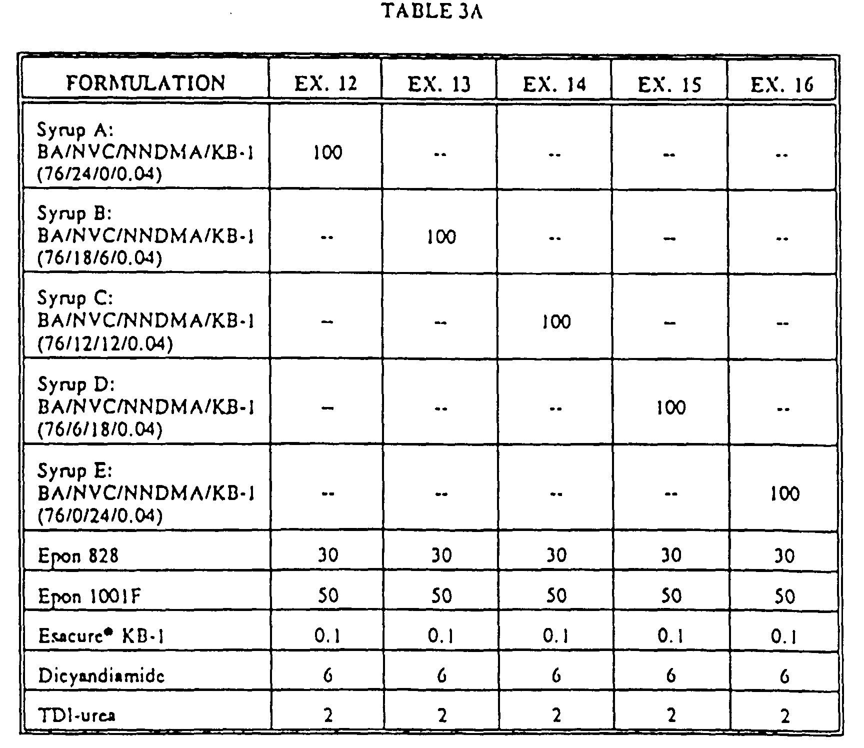

**TABLE 3B**

| PROPERTIES | EX. 12 | EX. 13 | EX. 14 | EX. 15 | EX. 16 |
|---|---|---|---|---|---|
| 120°C (250°F) Shear Creep Flow, cm | 1.6 | 3.4 | 4.1 | 5.5 | 6.1 |
| Meltability Visual Evaluation (scale 1-5) | 1 | 2 | 3 | 3 | 3 |
| Dynamic Shear, ED-3150 coated steel² (cured: 120°C. x 30 min), 10⁵ Pa (psi) | 73.08 (1060) | 54.54 (791) | 45.64 (662) | 24.41 (354) | 18.41 (267) |
| T-peel, ED-3150 coated steel (cured: 120°C. x 30 min), 10⁵ Pa (psi) | (45) 3.10 | (43) 2.97 | (38) 2.62 | (26) 1.79 | (25) 1.72 |
| 90 degree peel (uncured) 20 min. dwell off ED-3150, kg/cm (lb/0.5 inch) | 1.53 (4.3) | 2.82 (7.9) | 3.00 (8.4) | 3.25 (9.1) | 3.07 (8.6) |

| | | | | | |
|---|---|---|---|---|---|
| ² Electro-coated steel panels coated with paint primer available as ED-3150 from PPG Industries. | | | | | |

### EXAMPLE 17

A formulation was prepared generally according to the procedures of the previous Examples using the ingredients (and amounts) listed in Table 4 below.

**TABLE 4**

| INGREDIENT | AMOUNT |
|---|---|
| BA/NNDMA (80/20) | 100 |
| Irgacure™651 | 0.14 |
| Epicote™1001 (from Shell Chemical Co.) | 85 |
| Epon™828 | 15 |
| Whiton™SB (calcium carbonate from Shiraishi Kogyo Kaisba, Ltd.) | 20 |
| Dicyandiamide | 7 |
| 2,4-Diamino-6-[2'-(methylimidazoyl)-(1')]-ethyl-S-triazine isocyanurate adduct (from Shikoku Chemical Co., Ltd.) | 4 |
| Glycidyl methacrylate | 3 |
| 3-mercaptopropionic acid | 0.02 |

### EXAMPLE 18

An acrylate syrup was prepared by mixing 72 parts n-butylacrylate with 28 parts of N,N-dimethylacrylamide and 0.04 parts 2,2-dimethoxy-2-phenyl acetophenone photoinitiator (Irgacure™ 651 available from Ciba Geigy) and the mixture was then polymerized under ultraviolet lights in a nitrogen atmosphere to a viscosity of about 3 Pa.s (3000 cps). A thermosettable composition was prepared by mixing 100 parts of the acrylate syrup, 0.1 part 2,2-dimethoxy-2-phenyl acetophenone photoinitiator (Irgacure™651), 60 parts Epikote™1001 (available from Shell Chemical Co.), 20 parts Epikote™ 828 (available from Shell Chemical Co.), 6 parts micronized dicyandiamide (available from Air Products), 2 parts 2,4-diamino-6-[2'-methylimidazoyl-(1')]-ethyl-S-triazine isocyanurate adduct (2MA-OK available from Shikoku Chemical), 4 parts silica (Aerosil R-972 available from DeGussa), 4 parts K15 glass bubbles (available from Minnesota Mining and Manufacturing Co. under the Scotchlite™ trademark), 3 parts glycidyl methacrylate, and 0.2 parts mercaptopropionic acid for 3 hours. The mixture was then degassed and knife-coated onto a 50 micron thick silicone release coated liner to a thickness of 2.0 mm. A second silicone release coated liner was placed over the coated composition and cured with UV lights as described in Example 1, using intensities of 0.5 mW/cm² above and below the web, and a total energy input of 800 mJ/cm², to form a sheet material.

A melt sealing tape was prepared by cutting a sample measuring 20 mm by 100 mm. A polyester nonwoven material having a basis weight of 10 grams/square meter (Syntex™PS-R-055 sold by Mitsui Petrochemical Co.) was cut to a dimension of 10 mm by 100 mm. The nonwoven was laminated to the center of the melt sealing tape so that 5 mm of melt sealing tape were exposed on each side of the nonwoven.

The tape was tested by applying the tape to a 3 mm thick metal panel having a depression on the surface measuring 5 mm in diameter and 0.5 mm deep, with the nonwoven covering the depression. The taped panel was then heated in an oven at 140°C for 30 minutes. The panel was cooled to room temperature and no defects were visible on the panel. The sheet material without the nonwoven was tested in a similar manner and a defect was noted in the area on the melt sealing tape covering the depression.

### EXAMPLES 19-21

A solution was formed by mixing BA, NNDMA, Epon™828, and B60 were added in the parts by weight shown in Table 4A and placed on a roller mill overnight to dissolve the B60 to form an epoxy/acrylate solution. The polycaprolactone polyol (TONE™0240) was heated to 70°C and added to the epoxy/acrylate mixture, and the remaining ingredients were added using a high shear mixer.

After degassing under vacuum the mixtures were knife-coated to a thickness of 2 mm between two 0.05 mm silicone coated polyester release liners. The coated mixtures were cured with blacklight irradiation as described in Example 1 with a total energy of 652 mJ/cm² to form sheets, 338 mJ/cm² above the web and 314 mJ/cm² below the web. The intensity above the web was 2.09 mW/cm² and the intensity below the web was 1.94 mW/cm².

The sheets were tested for tensile strength, elongation, and vertical flow and results in Table 5 show how a polycaprolactone polyol can be used to modify the flow properties as well as the physical properties of the sheet.

**TABLE 4A**

| | Example 19 | Example 20 | Example 21 |
|---|---|---|---|
| BA | 70 | 70 | 70 |
| NNDMA | 30 | 30 | 30 |
| B60 | 80 | 80 | 80 |
| TONE™0240 | 0 | 10 | 20 |
| EPON™828 | 20 | 20 | 20 |
| KB-1 | .16 | .16 | .16 |
| IRG 1010 | .1 | .1 | .1 |
| DICY | 3 | 3 | 3 |
| HINP | 1 | 1 | 1 |
| C15-250 | 2 | 2 | 2 |
| M5 | 2.5 | 2.5 | 2.5 |

**TABLE 5**

| | Example 19 | Example 20 | Example 21 |
|---|---|---|---|
| Initial Tensile Strength - MPa | 2.7 | 2.2 | 2.0 |
| Initial Elongation - % | 271 | 282 | 269 |
| Cured Tensile Strength - MPa | 807 | 648 | 540 |
| Cured Elongation - % | 136 | 165 | 147 |
| Flow - mm | 2 | 3.5 | 5.5 |

### EXAMPLES 22-27

These examples were prepared as in Example 19 with varying materials shown in Table 6 and cured with a total energy of 647mJ/cm², with 343 mJ/cm² above the web and 304 mJ/cm² below the web. The intensity on top of the web was 2.07 mW/cm² and 1.83 mW/cm² below the web. Test results are shown in Table 7.

**TABLE 6**

| Example | 22 | 23 | 24 | 25 | 26 | 27 |
|---|---|---|---|---|---|---|
| BA | 80 | 70 | 70 | 80 | 70 | 70 |
| NNDMA | 20 | 30 | 30 | 20 | 30 | 30 |
| B60 | 40 | 40 | 60 | 40 | 40 | 60 |
| TONE™0240 | 0 | 0 | 0 | 20 | 20 | 20 |
| EPONEX™1510 | 40 | 40 | 40 | 40 | 40 | 40 |
| KB-1 | .14 | .14 | .14 | .14 | .14 | .14 |
| IRG 1010 | .1 | .1 | .1 | .1 | .1 | .1 |
| DICY | 3 | 3 | 3 | 3 | 3 | 3 |
| 2MZ AZINE | 1.5 | 1.5 | 1.5 | 1.5 | 1.5 | 1.5 |
| C15-250 | 2 | 2 | 2 | 2 | 2 | 2 |
| M5 | 4.5 | 4.5 | 4.5 | 4.5 | 4.5 | 4.5 |

**TABLE 7**

| Example | 22 | 23 | 24 | 25 | 26 | 27 |
|---|---|---|---|---|---|---|
| 90° Peel - N/dm | 120 | 72 | 22 | 72 | 92 | 8.8 |
| Initial Tensile Strength - MPa | 0.1 | 1.3 | 2.1 | 0.1 | 0.9 | 1.5 |
| Initial Elongation - % | 194 | 611 | 466 | 789 | 757 | 471 |
| Cured Tensile Strength - MPa | 234 | 494 | 603 | 48 | 239 | 379 |
| Cured Elongation - % | 398 | 209 | 165 | 607 | 430 | 306 |
| Flow - mm | 6.5 | 2.0 | 2.0 | 26 | 17.5 | 6.0 |

### EXAMPLES 28-38

These examples were prepared as in Example 19 except that various polycaprolactone polyols were used as shown in Table 8. The amounts of the other materials were kept the same and were: BA - 80; NNDMA - 20; EPON™1001 - 80; KB-1 - 0.16; DICY - 1.2; C15-250 - 4; M5 - 4. B60 not used in these formulations. Total energy to cure was 654.6 mJ/cm², with 341 mJ/cm² above the web and 310 mJ/cm² below the web. The intensity on top of the web was 1.87 mW/cm² and 1.66 mW/cm² below the web. Test results are also shown in Table 8.

**TABLE 8**

| Example | 28 | 29 | 30 | 31 | 32 | 33 | 34 | 35 | 36 | 37 | 38 |
|---|---|---|---|---|---|---|---|---|---|---|---|
| TONE™0200 | - | 10 | 20 | - | - | - | - | - | - | - | - |
| TONE™0240 | - | - | - | 10 | 20 | - | - | - | - | - | - |
| TONE™0230 | - | - | - | - | - | 10 | 20 | - | - | - | - |
| TONE™0240 | - | - | - | - | - | - | - | 10 | 20 | - | - |
| TONE™0260 | - | - | - | - | - | - | - | - | - | 10 | 20 |
| TEST A | 55.7 | 315 | 672 | 175 | 371 | 140 | 80.6 | 109 | 193 | 91.1 | |
| TEST B | 3.5 | 4.4 | 2.8 | 3.5 | 4.3 | 3.8 | 5.0 | 2.1 | 5.1 | 4.9 | |
| TEST C | .1* | .2* | .1* | .3* | .2* | .4* | .3* | .5* | .4* | .7* | |
| TEST D | 792 | 134 | 133 | 644 | 64 | 1009 | 84 | 954 | 65 | 797 | |
| TEST E | 2.7 | 3.2 | 14.9 | 2.9 | 3.9 | 3.8 | 4.1 | 4.1 | 6.3 | 5.4 | |
| TEST F | 84 | 30 | 7 | 22 | 10 | 35 | 11 | 18 | 5 | 9 | |
| TEST G | 70 | 85 | 88 | 88 | 87 | 85 | 85 | 87 | 86 | 92 | |
| TEST H | 10 | 22 | 23 | 18 | 24 | 15 | 19 | 7 | 9 | 4 | |
| TEST I | 100 | 100 | 100 | 100 | 100 | 100 | 100 | 100 | 100 | 100 | |

| | | | | | | | | | | | |
|---|---|---|---|---|---|---|---|---|---|---|---|
| * Sample did not break; peak elongation reported | | | | | | | | | | | |
| TEST A - 90° Peel - N/dm TEST B - Cured Overlap Shear Strength - MPA TEST C - Initial Tensile Strength - MPa TEST D - Initial Elongation - % TEST E - Cured Tensile Strength - MPa TEST F - Cured Elongation - % TEST G - Cured Hardness - Shore A (measured with a Shore A hardness tester) TEST H - Flow - mm TEST I - Paint Adhesion | | | | | | | | | | | |

### EXAMPLES 39-42

Sheet materials were prepared using a polyester polymer (Dynapo™S1402) and polycaprolactone polymers (TONE™300 and TONE™P767E) to alter the properties of the sheet materials in these examples. The basic formulations were the same for all of the examples and different amounts of polymers were added as shown in Table 9. Materials used in the basic formulation were: BA - 80; NNDMA - 20; EPON™1001 - 80; KB-1 - 0.16; DICY - 2.8; HINP - 1.2; C15-250 - 4; M5 - 4 and CBr₄ - 0.4. The polymers were mixed with the BA, NNDMA, and epoxy and heated, with occasional agitation, to 70°C to melt the polymers and form a molten solutions. The remaining components (catalyst, accelerator, photoinitiator, and fillers) were added to the solutions (which had been cooled to room temperature) with a high shear mixer and degassed. Sheets (2.0 mm thick) were prepared as described in Example 19 with a total cure energy of 654.6 mJ/cm², with 341 mJ/cm² above the web and 310 mJ/cm² below the web, for examples 39-42. The intensities were 1.87 mW/cm² above the web and 1.66 mW/cm² below the web. Total energy to cure for Examples 43-44 was 6.5mJ/cm², with 343 mJ/cm² above the web and 304 mJ/cm² below the web. The intensity was 2.07 mW/cm² above the web and 1.83 mW/cm² below the web.

**TABLE 9**

| Example | 39 | 40 | 41 | 42 | 43 | 44 |
|---|---|---|---|---|---|---|
| TONE™300 | - | 10 | 20 | - | - | - |
| TONE™P767E | - | - | - | 5 | - | - |
| DYNAPOL™S1402 | - | - | - | - | 5 | 10 |
| TEST A | 56 | 59.5 | 35 | 63 | 59.5 | 23.4 |
| TEST B | 3.5 | 2.6 | 0.7 | 2.2 | 2.6 | 3.4 |
| TEST C | 0.1 | 1.0 | 1.1 | 1.5 | 1.0 | 1.2 |
| TEST D | 792 | 833 | 630 | 943 | 833 | 832 |
| TEST E | 2.7 | 2.9 | 2.0 | 1.6 | 2.9 | 1.4 |
| TEST F | 84 | 115 | 340 | 212 | 115 | 150 |
| TEST G | 70 | 82 | 80 | 86 | 82 | 83 |
| TEST H | 10 | 4 | 18 | 5 | 4 | 3 |
| TEST I | 100 | 100 | 100 | 100 | 100 | 100 |
| NOTE: Tests are indicated under Table 8. | | | | | | |

### EXAMPLES 45-47 and COMPARATIVE EXAMPLES C1-C2

A 1.5 mm thick thermosettable pressure sensitive adhesive sheet material was prepared as described in Example 19 except that the formulation was BA - 60; NVC - 40; Eponex™1510 - 80; Acryloid™B60 - 80; KB-1 - 0.16; DICY - 6; 2MZ Azine - 3; M5 - 4.5. The total energy used to cure the sheet was 647mJ/cm² (343 MJ/cm² above the web and 304 mJ/cm² below) with an intensity of 2.07 mW/cm² above the web and 1.83 mW/cm² below the web.

Various thermoplastic films, shown in Table 10, were laminated to the sheet by hand except for Example 46 wherein the material was coated onto the silicone coated side of the polyester. The sheet was then cut to fit a recessed overlap joint (U-shaped channel made by bending 2 strips of cold rolled steel at 90° and spot welding the strips together to form the channel having a step joint) and heat cured at 20 minutes at 177°C. The examples having a smooth surface were painted and tested for adhesion of paint to the film according to the above described paint adhesion test. Test results are shown in Table 10.

**TABLE 10**

| Ex | FILM | Appearance After Cure | Paint Adhesion % |
|---|---|---|---|
| 45 | 0.05 mm thick Polyimide film (Apical 200 AV from Allied Signal | Smooth surface with good sealing | 95 |
| 46 | 0.05 mm thick biaxially oriented polyester with 1 side coated with silicone (Silicone CT 200 GA from Courtaulds Performance Films | Smooth surface with good sealing | 100 |
| 47 | 0.076 mm thick biaxially oriented polyester film (Melinex 605 from ICI Films | Smooth surface with good sealing | 100 |
| C1 | 0.05 mm thick polyvinylchloride film | Film wrinkled & sagged; good sealing | * |
| C2 | 0.05 mm thick biaxially oriented polypropylene film | Film shrank during heating; poor sealing | * |

| | | | |
|---|---|---|---|
| * Not painted | | | |

### EXAMPLES 48 - 50

An adduct of a diglycidyl ether of bisphenol A (DGEBA) and 2-isocyanatoethylmethacrylate (IEM) was prepared by charging the following materials, under a dry air atmosphere, to a 500-ml three-neck flask round bottom flask equipped with a mechanical stirrer, reflux condenser, and a thermometer: 200 grams of Epon™828, 10.06 grams IEM (from Dow Chemical Co.), and 6 drops of dibutyl(tin)dilaurate. The flask was immersed in an oil bath an heated to 65°C for about 5 hours until no residual isocyanate could be detected by infrared. The reaction product (DGEBA/IEM adduct) was allowed to cool to room temperature and placed in an amber bottle. A 50/50 mixture of BA and NVC was heated to 50°C to form a solution. A mixture (MIX) was prepared by mixing 400 parts of the BA/NVC solution, 600 parts BA, and 1000 parts Epon™1001. The mixture was further compounded with fillers and catalysts as shown in Table 11 and 2.0 mm thick sheets were prepared as described in Example 19. The sheet was substantially tack free. The test data in Table 11 indicate that the stiffness of the sheet material was significantly increased without affecting the melt flow properties.

**TABLE 11**

| Example | 48 | 49 | 50 |
|---|---|---|---|
| MIX | 1400 | 200 | 200 |
| KB-1 | 0.7 | 0.7 | 0.7 |
| IRG 1010 | 0.7 | 0.2 | 0.2 |
| DICY | 24.5 | 3.5 | 3.5 |
| HINP | 8.75 | 1.25 | 1.25 |
| CBr₄ | 5.6 | 0.8 | 0.8 |
| C15-250 | 28 | 4 | 4 |
| M5 | 35 | 5 | 5 |
| DGEBA/IEM ADDUCT | 0 | 5 | 10 |
| Melt Flow | 3 | 3 | 3 |
| Cured Overlap Shear -* | (836) 58.8' | (777) 54.6 | (700) 49.2 |
| Stiffness Ratio** - Torque/Viscous modulus kg.cm (inch pounds) | 0.0/0.0 | 0.24/(0.08) 0.09 | 1.53/(0.29) 0.33 |

| | | | |
|---|---|---|---|
| * All failures were cohesive; results are in kg/cm² (pounds per square inch) | | | |
| ** Stiffness ratio calculated on a Monsanto MDR (moving die rheometer); run conditions - oscillating at 0.5° at 177°C for 30 minutes | | | |

### EXAMPLES 51-60

Thermosettable sheets were prepared by mixing the BA, NNDMA, the epoxy resins, and the poly(vinylbutyral) in the amounts shown in Table 12 until a solution was formed. The fillers (20 parts calcium carbonate), epoxy hardeners (in Table 12), photoinitiator (0.2 parts), and a chain transfer agent (0.1 parts 3-mercaptoproprionic acid) were then added using high shear mixing. The mixture was then degassed and coated to a thickness of 0.4 mm as described in Example 19. The total energy to photocure the sheet was 800 mJ/cm² at an itensity of 0.5 mW/cm² above and below the web. A portion of the sheets of each composition was then thermoset at 140°C for 30 minutes. The sheets were then tested for tensile strength before and after thermal curing and results are reported in kg_{f}/cm² in Table 13. The tackiness of the sheets is also reported. All of the examples had sufficient flow except for Example 55 which flowed slightly. The data show how the tack and tensile properties can be modified with poly(vinylbutyral).

**TABLE 12**

| Ex. | BA | NNDMA | EPIKOTE 828 | EPIKOTE 1001 | BUTVAR B79 | BUTVAR B76 | DICY | 2MAOK |
|---|---|---|---|---|---|---|---|---|
| 51 | 80 | 20 | 10 | 60 | 20 | 0 | 6 | 2 |
| 52 | 80 | 20 | 10 | 60 | 40 | 0 | 6 | 2 |
| 53 | 80 | 20 | 10 | 60 | 50 | 0 | 6 | 2 |
| 54 | 80 | 20 | 10 | 60 | 80 | 0 | 6 | 2 |
| 55 | 80 | 20 | 10 | 60 | 0 | 40 | 6 | 2 |
| 56 | 80 | 20 | 20 | 130 | 40 | 0 | 10 | 4.5 |
| 57 | 80 | 20 | 30 | 170 | 40 | 0 | 14 | 6 |
| 58 | 80 | 20 | 10 | 60 | 0 | 0 | 6 | 2 |
| 59 | 80 | 20 | 10 | 60 | 5 | 0 | 6 | 2 |
| 60 | 80 | 20 | 10 | 60 | 120 | 0 | 6 | 2 |
| 61 | 80 | 20 | 0 | 5 | 40 | 0 | 1.4 | .6 |
| 62 | 80 | 20 | 4 | 16 | 40 | 0 | 1.4 | .6 |
| 63 | 80 | 20 | 100 | 400 | 40 | 0 | 35 | 15 |

**TABLE 13**

| Example | Tackiness | Tensile* | Tensile** |
|---|---|---|---|
| 51 | tackfree | 32.6 | 79.9 |
| 52 | tackfree | 68.1 | 96.5 |
| 53 | tackfree | 81.8 | 111.1 |
| 54 | tackfree | 86.6 | 147.0 |
| 55 | tackfree | 70.9 | 97.2 |
| 56 | tackfree | 55.8 | 103.0 |
| 57 | tackfree | 33.4 | 104.1 |
| 58 | tacky | 6.3 | 41.0 |
| 59 | tacky | 4.8 | 32.4 |
| 60 | NT | NT | NT |
| 61 | tacky | 75.8 | 82.0 |
| 62 | tacky | 73.4 | 80.7 |
| 63 | Not tested | Not tested | Not tested |

| | | | |
|---|---|---|---|
| * before thermal curing | | | |
| ** after thermal curing | | | |

## Claims

1. A method for imparting topographical features to a permanent substrate comprising the steps of:
a) providing a hardenable sheet material having first and second major surfaces, comprising a latent thermosettable pressure-sensitive adhesive throughout a major portion of its thickness, exhibiting pressure-sensitive adhesive properties at said first major surface, and having a thermoplastic film that is dimensionally stable at said second major surface;
b) contacting and adhering said first major surface of said sheet material to said permanent substrate or a temporary substrate leaving said dimensionally stable thermoplastic film at said second major surface of said sheet material exposed;
c) thermosetting and hardening said sheet material to provide a smooth transition between said dimensionally stable thermoplastic film and said permanent substrate or said temporary substrate to which it has been adhered; and
d) in the event said hardened sheet material is adhered to said temporary substrate, removing said hardened sheet material therefrom and thereafter fastening said first major surface of said sheet material to said permanent substrate,
wherein the adhesive exhibits pressure-sensitive adhesive properties at the temperature at which the sheet material is contacted with the permanent substrate or temporary substrate in step b).

2. A method according to Claim 1, wherein step b) is the contacting and adhering of said first major surface of said sheet material to said permanent substrate.

3. A method according to any one of Claims 1 and 2, the sheet material is heated in step c).

4. A method according to Claim 3, wherein step c) is accomplished by heating said sheet material to a temperature to decrease its modulus, followed by heating said sheet material to a higher temperature to thermoset and harden said sheet material.

5. A method according to any one of Claims 1 to 4, further comprising the step of painting said dimensionally stable thermoplastic film prior to step c).

6. A method according to any one of Claims 1 to 4, further comprising the step of painting said dimensionally stable thermoplastic film subsequent to step c).

7. A method according to any one of Claims 1 to 6, wherein said thermosettable pressure-sensitive adhesive exhibits pressure-sensitive adhesive properties at ambient temperature.

8. A method according to Claim 1, wherein said sheet material comprises said thermosettable pressure-sensitive adhesive throughout its entire thickness.

9. A method according to any one of Claims 1 to 8, wherein said thermosettable pressure-sensitive adhesive comprises the photochemical reaction product of starting materials comprising i) a prepolymeric or monomeric syrup comprising an alkyl acrylate or methacrylate wherein said alkyl moiety comprises 4 to 12 carbon atoms; ii) an epoxy resin; iii) a photoinitiator; and iv) a heat-activatable hardener for said epoxy resin.

10. A method according to Claim 9, wherein said starting materials further comprise a chain transfer agent.

11. A method according to any one of Claims 1 to 10, wherein said thermosettable pressure-sensitive adhesive comprises the photochemical reaction product of starting materials comprising:
a) 100 parts by weight of a prepolymeric or monomeric syrup comprising an alkyl acrylate or methacrylate wherein said alkyl moiety comprises 4 to 12 carbon atoms;
b) from 25 to 120 parts by weight of an epoxy resin based on 100 parts of said syrup,
c) from 0.01 to 5 parts by weight of a photoinitiator based on 100 parts of said syrup, and
d) from 0.1 to 20 parts by weight of a heat-activatable hardener for said epoxy resin based on 100 parts of said syrup.

12. A method according to Claim 11, wherein said prepolymeric or monomeric syrup further comprises a reinforcing monomer copolymerizable with said alkyl acrylate or methacrylate.

13. A method according to Claim 12, wherein said reinforcing comonomer is selected from the group consisting of acrylic acid, isobornyl acrylate, N-vinylcaprolactam, N-vinylpyrrolidone, N-vinyl piperidine, N,N-dimethylacrylamide and acrylonitrile.

14. A method according to Claim 9, wherein said prepolymeric or monomeric syrup further comprises an epoxy-functional monomer.

15. A method according to Claim 14, wherein said epoxy-functional monomer is selected from the group consisting of glycidyl methacrylate and glycidyl acrylate.

16. A method according to Claim 12, wherein said prepolymeric or monomeric syrup comprises from 50 to 95 parts by weight of said alkyl acrylate or methacrylate and correspondingly 50 to 5 parts by weight of said reinforcing comonomer.

17. A method according to Claim 11, wherein said epoxy resin is selected from the group consisting of a phenolic epoxy resin, a bisphenol epoxy resin, a hydrogenated bisphenol epoxy resin, an aliphatic epoxy resin and a halogenated bisphenol epoxy resin.

18. A method according to Claim 11, wherein said starting materials further comprise a chain transfer agent.

19. A method according to any one of Claims 1 to 18, wherein said sheet material is an emblem or insignia or design element and said permanent substrate is primed or unprimed metal.

20. A method according to any one of Claims 1 to 19, wherein said sheet material is in the form of a tape and said permanent substrate is primed or unprimed metal.

21. A method according to any one of Claims 1 to 20, wherein said permanent substrate is a primed or unprimed metallic portion of an automobile body.

22. A method according to any one of Claims 1 to 21, wherein said thermoplastic film is a polyimide film that has a thickness of from 0.025 mm to 0.5 mm.

23. A method according to any one of Claims 1 to 21, wherein said thermoplastic film is a biaxially oriented polyester film that has a thickness of from 0.025 mm to 0.5 mm.

24. A method according to any one of Claims 1 to 21, wherein said thermoplastic film is a polyimide film that has a thickness of from 0.05 mm to 0.25 mm.

25. A method according to any one of Claims 1 to 21, wherein said thermoplastic film is a biaxially oriented polyester film that has a thickness of from 0.05 mm to 0.25 mm.

26. A method according to any one of Claims 1 to 25, wherein said sheet material comprises a polycaprolactone polyol.

27. A method according to any one of Claims 1 to 26, wherein said sheet material further comprises a nonwoven material.

## Patentansprüche

1. Verfahren, um einem permanenten Substrat topographische Merkmale zu verleihen, umfassend die Schritte:
(a) Bereitstellen eines härtbaren Folienmaterials mit einer ersten und einer zweiten Hauptfläche, das einen latenten thermisch fixierbaren Haftkleber über den größten Teil seiner Dicke aufweist, der auf der ersten Hauptfläche Haftklebereigenschaften aufweist, und mit einer thermoplastischen Folie, die an der zweiten Hauptfläche maßhaltig ist;
(b) In-Kontakt-Bringen der ersten Hauptfläche des Folienmaterials mit dem permanenten Substrat oder einem temporären Substrat und Anheften derselben, wobei die maßhaltige thermoplastische Folie an der zweiten Hauptfläche des Folienmaterials exponiert bleibt;
(c) thermisches Fixieren und Härten des Folienmaterials, so daß man einen glatten Übergang zwischen der maßhaltigen thermoplastischen Folie und dem permanenten Substrat oder dem temporären Substrat, an das sie geheftet wurde, erhält; und
(d) wenn das gehärtete Folienmaterial an das temporäre Substrat geheftet ist, Entfernen des gehärteten Folienmaterials von dem temporären Substrat und danach Befestigen der ersten Hauptfläche des Folienmaterials an dem permanenten Substrat, wobei der Kleber Haftklebereigenschaften bei der Temperatur aufweist, bei der das Folienmaterial in Schritt b) mit dem permanenten Substrat oder temporären Substrat in Kontakt gebracht wird.

2. Verfahren gemäß Anspruch 1, wobei es sich in Schritt b) um das In-Kontakt-Bringen der ersten Hauptfläche des Folienmaterials mit dem permanenten Substrat und Anheften derselben handelt.

3. Verfahren gemäß einem der Ansprüche 1 und 2, wobei das Folienmaterial in Schritt c) erhitzt wird.

4. Verfahren gemäß Anspruch 3, wobei Schritt c) durchgeführt wird, indem man das Folienmaterial auf eine Temperatur erhitzt, bei der sein Elastizitätsmodul abnimmt, und das Folienmaterial anschließend auf eine höhere Temperatur erhitzt, um das Folienmaterial thermisch zu fixieren und zu härten.

5. Verfahren gemäß einem der Ansprüche 1 bis 4, das weiterhin den Schritt des Lackierens der maßhaltigen thermoplastischen Folie vor Schritt c) umfaßt.

6. Verfahren gemäß einem der Ansprüche 1 bis 4, das weiterhin den Schritt des Lackierens der maßhaltigen thermoplastischen Folie nach Schritt c) umfaßt.

7. Verfahren gemäß einem der Ansprüche 1 bis 6, wobei der thermisch fixierbare Haftkleber bei Raumtemperatur Haftklebereigenschaften aufweist.

8. Verfahren gemäß Anspruch 1, wobei das Folienmaterial den thermisch fixierbaren Haftkleber über seine gesamte Dicke umfaßt.

9. Verfahren gemäß einem der Ansprüche 1 bis 8, wobei der thermisch fixierbare Haftkleber das photochemische Reaktionsprodukt von Ausgangsstoffen umfaßt, die i) einen präpolymeren oder monomeren Sirup, der ein Alkylacrylat oder -methacrylat umfaßt, wobei die Alkylgruppe 4 bis 12 Kohlenstoffatome umfaßt, ii) ein Epoxyharz, iii) einen Photoinitiator und iv) einen thermisch aktivierbaren Härter für das Epoxyharz umfassen.

10. Verfahren gemäß Anspruch 9, wobei die Ausgangsstoffe weiterhin ein Kettenübertragungsmittel umfassen.

11. Verfahren gemäß einem der Ansprüche 1 bis 10, wobei der thermisch fixierbare Haftkleber das photochemische Reaktionsprodukt von Ausgangsstoffen umfaßt, die folgendes umfassen:
a) 100 Gewichtsteile eines präpolymeren oder monomeren Sirups, der ein Alkylacrylat oder -methacrylat umfaßt, wobei die Alkylgruppe 4 bis 12 Kohlenstoffatome umfaßt;
b) 25 bis 120 Gewichtsteile eines Epoxyharzes, bezogen auf 100 Teile des Sirups;
c) 0,01 bis 5 Gewichtsteile eines Photoinitiators, bezogen auf 100 Teile des Sirups; und
d) 0,1 bis 20 Gewichtsteile eines thermisch aktivierbaren Härters für das Epoxyharz, bezogen auf 100 Teile des Sirups.

12. Verfahren gemäß Anspruch 11, wobei der präpolymere oder monomere Sirup weiterhin ein verstärkendes Monomer umfaßt, das mit dem Alkylacrylat oder -methacrylat copolymerisierbar ist.

13. Verfahren gemäß Anspruch 12, wobei das verstärkende Comonomer aus der Gruppe ausgewählt ist, die aus Acrylsäure, Isobornylacrylat, N-Vinylcaprolactam, N-Vinylpyrrolidon, N-Vinylpiperidin, N,N-Dimethylacrylamid und Acrylnitril besteht.

14. Verfahren gemäß Anspruch 9, wobei der präpolymere oder monomere Sirup weiterhin ein epoxyfunktionelles Monomer umfaßt.

15. Verfahren gemäß Anspruch 14, wobei das epoxyfunktionelle Monomer aus der Gruppe ausgewählt ist, die aus Glycidylmethacrylat und Glycidylacrylat besteht.

16. Verfahren gemäß Anspruch 12, wobei der präpolymere oder monomere Sirup 50 bis 95 Gewichtsteile des Alkylacrylats oder -methacrylats und entsprechend 50 bis 5 Gewichtsteile des verstärkenden Comonomers umfaßt.

17. Verfahren gemäß Anspruch 11, wobei das Epoxyharz aus der Gruppe ausgewählt ist, die aus einem phenolischen Epoxyharz, einem Bisphenol-Epoxyharz, einem hydrierten Bisphenol-Epoxyharz, einem aliphatischen Epoxyharz und einem halogenierten Bisphenol-Epoxyharz besteht.

18. Verfahren gemäß Anspruch 11, wobei die Ausgangsstoffe weiterhin ein Kettenübertragungsmittel umfassen.

19. Verfahren gemäß einem der Ansprüche 1 bis 18, wobei das Folienmaterial ein Emblem oder Abzeichen oder Element eines Musters ist und das permanente Substrat grundiertes oder ungrundiertes Metall ist.

20. Verfahren gemäß einem der Ansprüche 1 bis 19, wobei das Folienmaterial in Form eines Bandes vorliegt und das permanente Substrat grundiertes oder ungrundiertes Metall ist.

21. Verfahren gemäß einem der Ansprüche 1 bis 20, wobei das permanente Substrat ein grundiertes oder ungrundiertes Metallteil einer Autokarosserie ist.

22. Verfahren gemäß einem der Ansprüche 1 bis 21, wobei die thermoplastische Folie eine Polyimidfolie mit einer Dicke von 0,025 mm bis 0,5 mm ist.

23. Verfahren gemäß einem der Ansprüche 1 bis 21, wobei die thermoplastische Folie eine biaxial orientierte Polyesterfolie mit einer Dicke von 0,025 mm bis 0,5 mm ist.

24. Verfahren gemäß einem der Ansprüche 1 bis 21, wobei die thermoplastische Folie eine Polyimidfolie mit einer Dicke von 0,05 mm bis 0,25 mm ist.

25. Verfahren gemäß einem der Ansprüche 1 bis 21, wobei die thermoplastische Folie eine biaxial orientierte Polyesterfolie mit einer Dicke von 0,05 mm bis 0,25 mm ist.

26. Verfahren gemäß einem der Ansprüche 1 bis 25, wobei das Folienmaterial ein Polycaprolactonpolyol umfaßt.

27. Verfahren gemäß einem der Ansprüche 1 bis 26, wobei das Folienmaterial weiterhin einen Vliesstoff umfaßt.

## Revendications

1. Procédé pour conférer des caractéristiques topographiques à un substrat permanent comprenant les étapes consistant à :
a) préparer un matériau en feuille durcissable présentant des première et seconde surfaces majeures, comprenant un adhésif sensible à la pression thermodurcissable latent sur toute une partie majeure de son épaisseur, présentant des propriétés d'adhésif sensible à pression au niveau de ladite première surface majeure, et pourvu d'un film thermoplastique qui est dimensionnellement stable au niveau de ladite seconde surface majeure ;
b) mettre en contact et faire adhérer ladite première surface majeure dudit matériau en feuille audit substrat permanent ou à un substrat temporaire en laissant ledit film thermoplastique dimensionnellement stable au niveau de la seconde surface majeure dudit matériau en feuille, exposé ;
c) thermofixer et durcir ledit matériau en feuille pour créer une transition douce entre ledit film thermoplastique dimensionnellement stable et ledit substrat permanent ou ledit substrat temporaire auquel il a été collé ; et
d) dans le cas où ledit matériau en feuille durci est collé audit substrat temporaire, enlever ledit matériau en feuille durci de celui-ci, puis fixer ladite première surface majeure dudit matériau en feuille audit substrat permanent,
dans lequel l'adhésif présente des propriétés d'adhésif sensible à la pression à la température à laquelle le matériau en feuille est mis en contact avec le substrat permanent ou le substrat temporaire dans l'étape b).

2. Procédé selon la revendication 1, dans lequel l'étape b) consiste à mettre en contact et à faire adhérer ladite première surface majeure dudit matériau en feuille audit substrat permanent.

3. Procédé selon l'une quelconque des revendications 1 et 2, dans lequel le matériau en feuille est chauffé dans l'étape c).

4. Procédé selon la revendication 3, dans lequel l'étape c) est mise en oeuvre en chauffant ledit matériau en feuille jusqu'à une certaine température de manière à réduire son module, puis en chauffant ledit matériau en feuille jusqu'à une température plus élevée pour thermofixer et durcir ledit matériau en feuille.

5. Procédé selon l'une quelconque des revendications 1 à 4 comprenant, en outre, l'étape consistant à peindre ledit film thermoplastique dimensionnellement stable avant l'étape c).

6. Procédé selon l'une quelconque des revendications 1 à 4 comprenant, en outre, l'étape consistant à peindre ledit film thermoplastique dimensionnellement stable après l'étape c).

7. Procédé selon l'une quelconque des revendications 1 à 6, dans lequel ledit adhésif sensible à la pression thermodurcissable présente des propriétés d'adhésif sensible à la pression à la température ambiante.

8. Procédé selon la revendication 1, dans lequel ledit matériau en feuille comprend ledit adhésif sensible à la pression thermodurcissable sur toute son épaisseur.

9. Procédé selon l'une quelconque des revendications 1 à 8, dans lequel ledit adhésif sensible à la pression thermodurcissable comprend le produit de la réaction photochimique de matériaux de départ comprenant :
i) un sirop prépolymère ou monomère comprenant un acrylate ou un méthacrylate d'alkyle, dans lequel ledit fragment d'alkyle comprend 4 à 12 atomes de carbone ;
ii) une résine époxy ;
iii) un amorceur photochimique ; et
iv) un durcisseur thermoactivable pour ladite résine époxy.

10. Procédé selon la revendication 9, dans lequel lesdits matériaux de départ comprennent, en outre, un agent de transfert de chaîne.

11. Procédé selon l'une quelconque des revendications 1 à 10, dans lequel ledit adhésif sensible à la pression thermodurcissable comprend le produit de la réaction photochimique de matériaux de départ comprenant :
a) 100 parties en poids d'un sirop prépolymère ou monomère comprenant un acrylate ou un méthacrylate d'alkyle dans lequel ledit fragment d'alkyle comprend 4 à 12 atomes de carbone ;
b) de 25 à 120 parties en poids d'une résine époxy pour 100 parties dudit sirop ;
c) de 0,01 à 5 parties en poids d'un amorceur photochimique pour 100 parties dudit sirop ; et
d) de 0,1 à 20 parties en poids d'un durcisseur thermoactivable pour ladite résine époxy pour 100 parties dudit sirop.

12. Procédé selon la revendication 11, dans lequel ledit sirop prépolymère ou monomère comprend, en outre, un monomère de renforcement copolymérisable avec ledit acrylate ou méthacrylate d'alkyle.

13. Procédé selon la revendication 12, dans lequel ledit comonomère de renforcement est choisi dans le groupe constitué par l'acide acrylique, l'acrylate d'isobornyle, le N-vinylcaprolactame, la N-vinylpyrrolidone, la N-vinylpipéridine, le N,N-diméthylacrylamide et l'acrylonitrile.

14. Procédé selon la revendication 9, dans lequel ledit sirop prépolymère ou monomère comprend, en outre, un monomère à fonction époxy.

15. Procédé selon la revendication 14, dans lequel ledit monomère à fonction époxy est choisi dans le groupe constitué par le méthacrylate de glycidyle et l'acrylate de glycidyle.

16. Procédé selon la revendication 12, dans lequel ledit sirop prépolymère ou monomère comprend de 50 à 95 parties en poids dudit acrylate ou méthacrylate d'alkyle et par conséquent, de 50 à 5 parties en poids dudit comonomère de renforcement.

17. Procédé selon la revendication 11, dans lequel ladite résine époxy est choisie dans le groupe constitué par une résine époxy phénolique, une résine époxy bisphénol, une résine époxy bisphénol hydrogénée, une résine époxy aliphatique et une résine époxy bisphénol halogénée.

18. Procédé selon la revendication 11, dans lequel lesdits matériaux de départ comprennent, en outre, un agent de transfert de chaîne.

19. Procédé selon l'une quelconque des revendications 1 à 18, dans lequel ledit matériau en feuille est un emblème ou un insigne ou un élément à motif et ledit substrat permanent est un métal avec ou sans couche d'accrochage.

20. Procédé selon l'une quelconque des revendications 1 à 19, dans lequel ledit matériau en feuille est sous la forme d'une bande et ledit substrat permanent est un métal avec ou sans couche d'accrochage.

21. Procédé selon l'une quelconque des revendications 1 à 20, dans lequel ledit substrat permanent est une partie métallique avec ou sans couche d'accrochage d'une carrosserie automobile.

22. Procédé selon l'une quelconque des revendications 1 à 21, dans lequel ledit film thermoplastique est un film en polyimide qui a une épaisseur de 0,025 à 0,5 mm.

23. Procédé selon l'une quelconque des revendications 1 à 21, dans lequel ledit film thermoplastique est un film en polyester bi-orienté qui a une épaisseur de 0,025 à 0,5 mm.

24. Procédé selon l'une quelconque des revendications 1 à 21, dans lequel ledit film thermoplastique est un film en polyimide qui a une épaisseur de 0,05 à 0,25 mm.

25. Procédé selon l'une quelconque des revendications 1 à 21, dans lequel ledit film thermoplastique est un film en polyester bi-orienté qui a une épaisseur de 0,05 à 0,25 mm.

26. Procédé selon l'une quelconque des revendications 1 à 25, dans lequel ledit matériau en feuille comprend un polycaprolactone polyol.

27. Procédé selon l'une quelconque des revendications 1 à 26, dans lequel ledit matériau en feuille comprend, en outre, un matériau non-tissé.
